# EUROPEAN PATENT APPLICATION

(11) **EP 1 916 268 A1**
(43) Date of publication of application: **30.04.2008**
(21) Application number: 06022122.3
(22) Date of filing: 23.10.2006
(51) Int. Cl.: C08G 18/08, C08J 3/09

(54) **Polymer compositions**

(71) Applicant: Cognis IP Management GmbH, 40589 Düsseldorf (DE)
(72) Inventor: Bigorra Llosas, Joaquin, Dr., 08201 Sabadell (ES); Reetz, Ivo, 08190 Barcelona (ES); Raya, Javier, 08620 Sant Vicenc dels Horts (ES); Mas, Teresa, 43420 STA. Coloma de Queralt (Tarragona) (ES); Höfer, Rainer, Dr., 40477 Düsseldorf (DE); Puche, Artal Julio, 08015 Barcelona (ES)
(74) Representative: Fabry, Bernd

(57) **Abstract**

Suggested are polymer compositions, comprising
(a) at least one polymer and
(b) at least one dialkylamide, except for dialkylformamides and dialkylacetamides.

## Description

### Object of the invention

The present invention relates to polymer compositions, more particularly to polyurethane dispersions comprising environmentally friendly solvents.

### State of the art

Polymer compositions, in particular dispersions of polyurethanes in mixtures of water and organic solvents, are known, for example, for the final treatment of leather, textile, fibers, wood, and other coating applications. The aim of using these polymers is to create basic physical and chemical fastnesses, or to change the touch of the material. Usually, the polymer compositions comprise solvents, such as N-methylpyrrolidone (NMP), dimethylformamide (DMF), dimethylacetamide (DMA) or xylene, which are chemically inert and reduce viscosity during the composition preparation. Nevertheless, these organic solvents are considered to be hazardous to human health and not very environmentally friendly.

It has therefore been the object of the present invention to provide new polymer compositions, particularly new polyurethane dispersions comprising solvents which behave in the same manner as the well known solvents such as NMP, DMF, DMA or xylene, but are less toxic and show a better biodegradability.

### Description of the invention

The present invention claims polymer compositions, comprising
(a) at least one polymer and
(b) at least one dialkylamide, except for dialkylformamides and dialkylacetamides.

Surprisingly it has been found that dialkylamides, preferably those which are liquid at 20 °C and are based on acids having a chain length of at least 3 carbon atoms, preferably 6 to 22 carbon atoms, and more preferably 8 to 12 carbon atoms, exhibit the requested profile in a perfect manner.

### Dialkylamides

According to the present invention it has been found that both dialkylamides based on mono and dicarboxylic acids are useful to act as solvents for the manufacture of the dispersions.

Therefore, in a first embodiment, suitable dialkylamines based on fatty acids follow the general formula **(I)**, 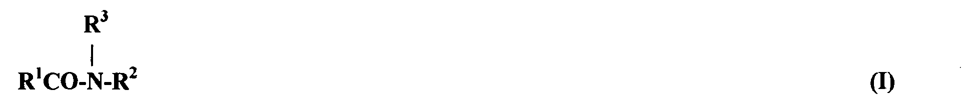 in which R¹CO stands for an aliphatic or aromatic acyl radical having 6 to 22 carbon atoms, preferably 8 to 12 carbon atoms and 0 or 1 to 3 double bonds, and R² and R³ independently from each other represent a C₁-C₄ alkyl radical. Typical examples are dialkylamides based on caproic acid, caprylic acid, 2-ethyl hexanoic acid, caprinic acid, lauric acid, myristic acid, palmitic acid, stearic acid, isostearic acid, oleic acid, (conjugated) linolic acid, linoleic acid, gadoleic acid, arachidonic acid, behenic acid, erucic acid, tall oil fatty acid, and their technical mixtures or benzoic acid. Examples for suitable alkyl groups are methyl, ethyl, propyl, i-propyl, n-butyl, i-butyl, and tert.-butyl.

In a second embodiment, said dialkylamides can be derived from dicarboxylic acids and follow the general formula **(II)** 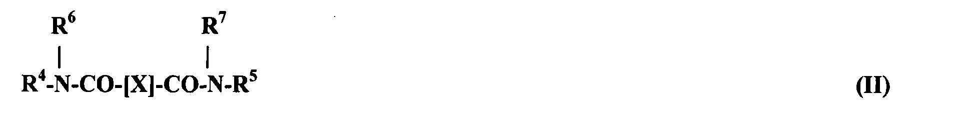 in which R⁴, R⁵, R⁶ and R⁷ independently from each other represent a C₁-C₄ alkyl or hydroxyalkyl radical and X stands for an alkylene group having 1 to 12 carbon atoms. Typical examples are the symmetrical or asymmetrical diainides based on maleic acid, fumaric acid or adipic acid. Examples for suitable alkyl groups are again methyl, ethyl, propyl, i-propyl, n-butyl, i-butyl, and tert.-butyl.

In a first preferred embodiment of the present invention, those dialkylamides are used which show similar alkyl groups, preferably methyl groups, since dimethylamides exhibit superior solvent properties. Therefore, the residues R², R³, R⁴, R⁵, R⁶ and R⁷ in formulae (I) and (II) preferably represent methyl groups. The species showing the best solvent properties can be found in the group comprising the C₆-C₁₂ fatty acid dimethylamides, which are especially preferred for the purpose of the present invention.

The relation between the polymers, in particular the polyurethane, and the dialkylamides is little critical and depends on the solvent properties in front of the polymer and on the technical application for which the products are desired. In particular for polyurethane dispersions, the composition typically comprises
(a) about 3 to about 50, preferably 5 to 35 % b.w. polymer
(b) about 1 to about 35, preferably 5 to 15 % b.w. dialkylamides
on condition that the amounts add up to 100 % b.w. with water.

### Manufacturing of the polymer compositions

A further object of the present invention is directed to a process for making polymer compositions, according to which one or more diols are treated with an isocyanate in the presence of a catalyst and a dialkylamide solvent to obtain the polyurethane. In case than a diol comprises free carboxylic groups, the resulting polyurethane is preferably neutralised with trialkylamines, like for example triethanolamine in order to obtain a water-soluble or water-dispersible anionic final product. The compositions may represent solutions or dispersions.

Typical examples for suitable polymers according to the present invention are polyolefins, polyesters, polyamides, and preferably polyurethanes. The selection of the monomers is not critical since the chemical structure of the polymer fully depends on the desired application. In case of the preferred isocyanates and with respect to an application for treatment of leather and textiles isoforon diisocyanate, toluene diisocyanate or H₁₂MDI and a polyether diol with varying chain length, a polyester diol or a polycarbonate diol have been found advantageous.

### Industrial application

As explained above, the dialkylamides show very good solvent properties during the manufacture of the polymer dispersions and do not cause any negative effects during the application of the dispersions, for example in the course of the leather, fibre or textile finishing.

The further objects of the present invention therefore are directed to the use of dialkylamides as solvents for the manufacture of polymer compositions and the use of said polymer compositions for the treatment of leather, fibres, textile and the coating of surfaces.

### Examples

### Example 1

### Manufacture of a leather auxiliary agent

20.9 kg of polytetrahydrofurane PTHF 1000 together with 2 kg dimethylolpropionic acid and 11.3 kg of a technical grade C₈-C₁₀ fatty acid dimethylamide were placed into a 1001 reactor. The mixture was heated to 50°C with stirring for 30 min until homogenisation. At 50°C, a first portion (50%) of totally 7.7 kg isoforon diisocyanate IPDI and 4 g tin dibutyllaurate catalyst was added. The reaction temperature was increased to 95°C, where it was maintained for 1 hour. The second portion of the catalyst was then added and the reaction continued at 95°C for a further hour. The temperature was then lowered to 70°C and the isocyanate number NCO was determined. Once the theoretical NCO value was achieved, the carboxylic groups were pre-neutralized with triethanol amine TEA. The temperature was maintained at 70°C for 30 min. A dispersion was obtained by slowly adding the prepolymer into a second reactor containing 64 kg of water and 1.2 kg of hydrazine monohydrate chain extender, avoiding that the temperature during dispersion exceeds 40°C. This low viscosity polyurethane dispersion was useful for the finishing of leather.

## Claims

1. Polymer compositions, comprising
(a) at least one polymer and
(b) at least one dialkylamide, except for dialkylformamides and dialkylacetamides.

2. Compositions according to Claim 1, **characterized in that** said polymer is a polyurethane.

3. Compositions according to Claims 1 and/or 2, **characterised in that** said dialkylamide follows the general formula (I), 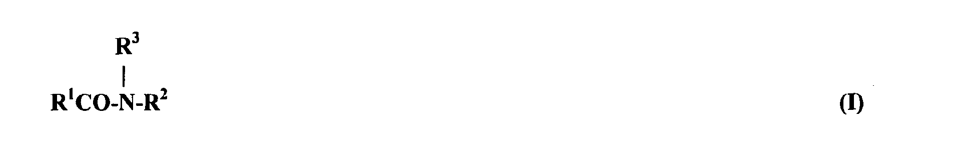 in which R¹CO stands for an aliphatic or aromatic acyl radical having 6 to 22 carbon atoms and 0 or 1 to 3 double bonds, and R² and R³ independently from each other represent a C₁-C₄ alkyl radical.

4. Compositions according to Claims 1 and/or 2, **characterised in that** said dialkylamide follows the general formula (II), 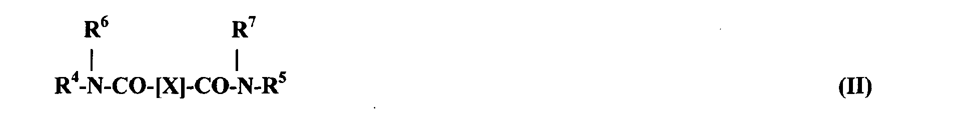 in which R⁴, R⁵, R⁶ and R⁷ independently from each other represent a C₁-C₄ alkyl radical and X stands for an alkylene group having 1 to 12 carbon atoms.

5. Compositions according to any of Claims 1 to 5, **characterised in that** R², R³, R⁴, R⁵, R⁶ and R⁷ stand for a methyl group.

6. Compositions according to any of Claims 1 to 6, **characterised in that** the dialkylamide is a C₆-C₁₂ fatty acid dimethylamide.

7. Compositions according to any of Claims 1 to 7, **characterised in that** they comprise
(a) 3 to 50 % b.w. polymers and
(b) 1 to 35 % b.w. dialkylamides
on condition that the amounts add to 100 % b.w. with water.

8. Compositions according to any of Claims 1 to 8, **characterised in that** the compositions represent either solutions or dispersions.

9. A process for making aqueous polymer compositions, **characterised in that** one or more diols are treated with an isocyanate in the presence of a catalyst and a dialkylamide as solvent to obtain a polymer dispersion or solution.

10. Use of dialkylamides, except for dialkylformamides and dialkylacetamides, as solvents for the manufacture of aqueous polymer compositions.

11. Use of aqueous polymer compositions according to Claim 1 for the treatment of leather, fibres, textiles, and the coating of surfaces.
